(19) Europäisches Patentamt

European Patent Office

Office européen des brevets

(11) **EP 0 639 500 B1**

(12) **EUROPEAN PATENT SPECIFICATION**

(45) Date of publication and mention
of the grant of the patent:
**22.04.1998 Bulletin 1998/17**

(21) Application number: **94910020.0**

(22) Date of filing: **16.03.1994**

(51) Int. Cl.$^6$: **B64C 27/04**, B64C 27/00,
F16F 9/53

(86) International application number:
**PCT/JP94/00418**

(87) International publication number:
**WO 94/21517 (29.09.1994 Gazette 1994/22)**

(54) **HELICOPTER**

HUBSCHRAUBER

HELICOPTERE

(84) Designated Contracting States:
**DE FR GB IT**

(30) Priority: **16.03.1993 JP 55550/93**

(43) Date of publication of application:
**22.02.1995 Bulletin 1995/08**

(73) Proprietor:
**MITSUBISHI JUKOGYO KABUSHIKI KAISHA
Tokyo 100 (JP)**

(72) Inventors:
• **SAKURA, Kiyoshi
Nagoya Aerospace System Works
Ninato-ku, Nagoya-shi Aichi-ken 455 (JP)**

• **TODA, Nobuo
Nagoya Aerospace System Works
Ninato-ku, Nagoya-shi Aichi-ken 455 (JP)**

(74) Representative:
**Luderschmidt, Schüler & Partner GbR
Patentanwälte,
Postfach 3929
65029 Wiesbaden (DE)**

(56) References cited:
EP-A- 0 382 171          EP-A- 0 511 055
EP-A- 0 530 075          GB-A-  615 386
JP-B- 2 009 988          JP-B-55 047 658
JP-U-60 124 384          JP-Y- 5 004 472
US-A- 3 857 534          US-A- 5 044 455

EP 0 639 500 B1

**Description**

TECHNICAL FIELD

The present invention relates to a helicopter which has less noise and vibration in a cabin and is very comfortable to ride in. More particularly, it relates to a helicopter having a floating type cabin.

BACKGROUND ART

So far, various vibration reducing apparatuses for reducing helicopter's vibration have been developed or used practically. The biggest source of vibration in the helicopter cabin is the rotation of a main rotor. The number of revolutions of the main rotor is usually about 4 to 6 per second. When the rotor blades are adjusted properly and well balanced, the vibration of this number of revolutions (called "1/rev" vibration, which means once per full revolution) by itself does not give any feeling problem to the passengers. The biggest problem is the vibration of a frequency of N/rev, the vibration of the number of revolutions 1/rev multiplied by the number of rotor blades N, which is herein called "high-frequency vibration". Since the number of blades is usually four (N = 4), N/rev is 15 to 20 Hz. Therefore, when the vibration of helicopter is to be reduced, the vibration of a frequency N/rev of 15 to 20 Hz must mainly be reduced. The vibration level of the vibration frequency N/rev in a conventional helicopter, which is not equipped with any vibration reducing apparatus, is about 0.5 G (G is the unit of vibration acceleration). This vibration level apparently makes the riders feel uncomfortable; therefore, some measures for reducing vibration are needed.

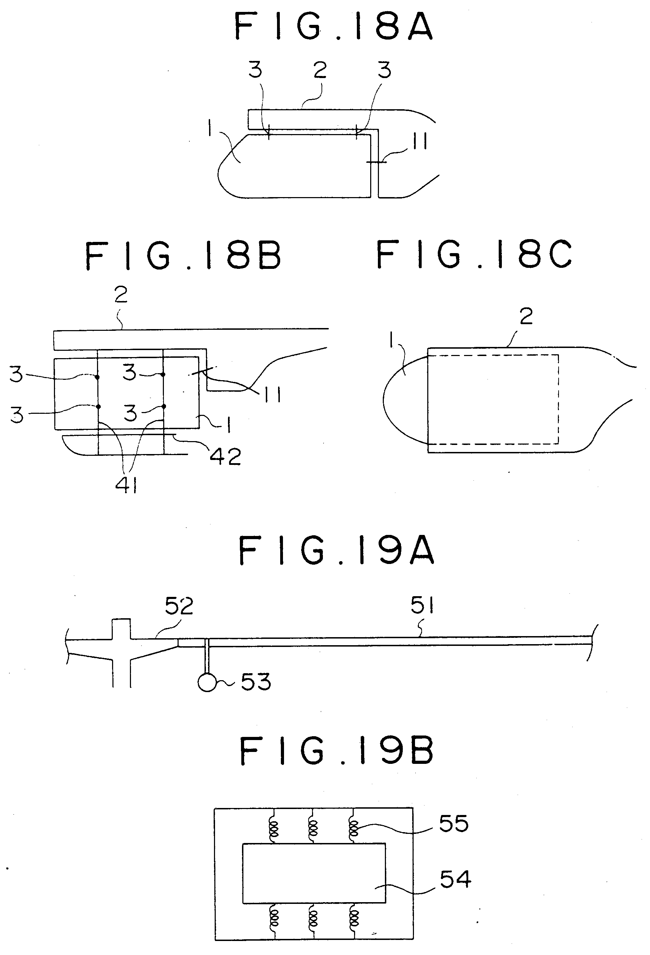

FIGS. 19A and 19B are a view for illustrating a conventional vibration reducing apparatus for a helicopter. One of the main causes of vibration exciting force caused by the rotation of the main rotor is the in-plane and out-of-plane vibrations of the blade 51. For this reason, a damping device using a pendulum is installed near the root of each blade 51 or on a rotor head 52 to reduce the vibration of the blade 51. Alternatively, a damping device in which a spring 55 and a weight 54 have been adjusted in accordance with the vibration frequency N/rev is installed to the airframe to reduce the vibration of airframe.

However, in the conventional vibration reducing apparatus for a helicopter, the pendulum 53 or the weight 54 of a considerable weight is needed to achieve a significant vibration reduction, and such an element also increases the air resistance of the helicopter. Beside the aforementioned apparatuses, various vibration reducing apparatuses for a helicopter have been developed. However, the apparatuses which have now been used practically show a small vibration reducing effect. An ideal vibration reducing apparatus which achieves a larger vibration reducing effect has many disadvantageous factors such as a complicated system and a power source needed for control.

In order to design a helicopter which is more comfortable to ride in, the vibration level of the main vibration frequency N/rev in the helicopter cabin is significantly reduced. Moreover, many conditions must be satisfied: The noise transmitting in the airframe should be reduced; a large vibration reducing effect should be achieved without making the structure of the vibration reducing apparatus complicated; static movement should not be increased while the vibration is isolated; the safety of flight should not be impaired; a large power for control should not be needed; and a significant vibration reduction should always be maintained even if the flight conditions or the cabin weight is changed.

In such a situation, helicopters which are provided with respective vibration reducing apparatuses of a relatively simple system are disclosed in United States Patent No. 3,857,534 and United Kingdom Patent No. 1,368,187. Both of these inventions were made by the identical inventer, in which vibration is prevented from being transmitted to the cabin by separating a cabin floor of helicopter from the airframe and by supporting the floor at the nodal points of vibration of the airframe via a two-stage cantilever.

DISCLOSURE OF THE INVENTION

An object of the present invention is to provide a low vibration helicopter which can easily be used practically.

To achieve the above object, the present invention provides a helicopter using the following configuration.

(1) A helicopter comprising: a main rotor having a plurality of blades; an engine for driving the main rotor; an airframe having the engine therein and a cabin support portion; springs and actuators installed on the cabin support portion; a cabin supported on the cabin support portion via the springs and the actuators; stoppers installed between the airframe including the cabin support portion and the cabin in parallel to the actuators so as to limit the distance between the cabin support portion and the cabin which varies with vibration within a certain range; a vibration state sensor installed in the cabin; and a vibration damping controller for receiving the output of the sensor and inputting a vibration damping signal which is obtained by multiplying the output value by gain K to the actuators.

(2) A helicopter according to item (1) above, characterized in that distance maintaining means is provided to keep the distance in the aircraft axis direction between the airframe and the cabin substantially constant.

(3) A helicopter according to item (1) or (2) above, characterized in that the actuator consists of a hydraulic actuator, and the hydraulic actuator and the spring are arranged in series to support the cabin.

(4) A helicopter according to item (2) above, characterized in that the actuator consists of an electromagnetic actuator, and the electromagnetic actuator and the spring are arranged in parallel on the cabin support portion to support the cabin.

(5) A helicopter according to item (1), (2), (3), or (4) above, characterized in that dampers are installed in parallel to the actuators to support the cabin on the cabin support portion.

(6) A helicopter according to item (5)above, characterized in that the damper consists of a variable damper, in which electrodes are installed in a cylinder of the variable damper, and the cylinder is filled with an electroviscous fluid.

(7) A helicopter according to item (6) above, characterized in that the helicopter further comprises a cabin weight detector, a resonance frequency computing unit for obtaining a spring resonance frequency from the output from said detector, a comparator for comparing the spring resonance frequency with the number of revolutions of the main rotor, and a damper controller for outputting a variable damping adjusting signal obtained from the comparison result to the variable damper.

(8) A helicopter according to item (7) above, characterized in that a detector for the number of revolutions of the main rotor is provided, and the number of revolutions obtained from the detector is outputted to the comparator.

(9) A helicopter according to item (5) above, characterized in that the cabin is modularized, and a different modular cabin can be mounted in accordance with an object of flight.

The helicopter flies by rotating the rotor with the engine, and the airframe of the helicopter is lifted into the air by the lift of the rotor resulting from the rotor rotation. In the helicopter of the present invention, the cabin in which the passengers and the crew ride is structurally separated from the airframe having the engine and the rotor, which are the sources of vibration. The cabin is installed on the cabin support portion of the airframe via the springs and actuators.

The object of the separation of the cabin from the airframe is to structurally isolate the cabin from the airframe so as to cut the transmission of vibration from the airframe to the cabin. Since the cabin must be supported on the airframe, it is supported by the actuators and springs interposed between the cabin and the airframe. The springs passively absorb the high frequency vibration, whose frequency is the product of the number of revolutions of the main rotor and the number of rotor blades N (frequency = N x (1/rev)), which is mainly produced by the rotor blades, thereby reducing the propagation of vibration to the cabin. Likewise, the actuators actively inhibit the vibration due to the rotor blades (frequency = 1/rev) and the low frequency resonance caused by the springs [ frequen cy = $(1/2\pi)(k/m)^{1/2}$ , where k is a spring constant, and m is a cabin weight], thereby reducing the propagation of these vibrations to the cabin.

In order to perform the active vibration damping, according to the present invention, the vibration state is detected as acceleration or displacement using the vibration state sensor disposed on the cabin side, the detected value is inputted to the vibration damping controller, and the vibration damping signal, which is obtained from the product of gain K and this value, is inputted to the actuators, so that the uncomfortable vibration of the cabin caused by the resonance vibration of low frequency is decreased.

When the hydraulic actuator is used in the present invention, a lightweight and small but powerful actuator can be provided simply by using conventional hydraulic systems placed around the engine. By using the powerful drive force of the conventional hydraulic systems, sufficient forces can be obtained even when the total weight of the cabin is applied to the hydraulic actuators. Therefore, by connecting the spring to the hydraulic actuator in series, the high and low frequency vibrations can be reduced in a composite manner while the total weight of the cabin is supported.

When the electromagnetic actuator is used in the present invention, by installing the spring in parallel to the electromagnetic actuator, the spring supports the total weight of the cabin, and simultaneously the high frequency vibration can be absorbed. As a result, the electromagnetic actuator performs the function of solely removing the low frequency resonance without supporting the cabin weight. Essentially, the electromagnetic actuator provides quick response but normally produces relatively low power. However, if there is no need for supporting the cabin weight, the quick response, which is its advantage, can be used effectively.

For the spring, coil spring, air spring, and other types of springs can be used in accordance with its property.

According to the present invention, the cabin can be supported by installing the damper in parallel with the actuator. In the case where the cabin is supported by the springs and the actuators, when soft springs are used to absorb the high frequency vibration as much as possible, a vibration corresponding to the vibration exciting force due to the rotation of main rotor would be present near the resonance frequency of the spring. Therefore, if the resonance peak (in terms of amplitude) of the spring is high, the resonance peak is increased by this vibration exciting force, so that it is sometimes difficult to carry out control by the actuator. The use of the damper can keep the resonance peak to a controllable extent. The use of the damper can inhibit the vibration to some extent because the damper absorbs the vibration even if the actuator becomes inoperative due to failure etc.

For the damper, it is a matter of course that an ordinary damper with a constant damping force can be used. In place of such an ordinary damper, a variable damper may be used more effectively. Such variable dampers comprise electrodes disposed in the cylinder of the damper, the cylinder is filled with an electroviscous fluid, and a varying voltage is applied so as to change damping forces arbitrarily. The variable damper is advantageous for the following reasons: When the resonance frequency [ $fn = (1/2\pi)(k/m)^{1/2}$ ] of the spring comes close to the vibration frequency (1/rev) of the main rotor, the use of a damper certainly lowers the resonance peak on the low frequency side. However, at the same time, the slope of the frequency-response curve is reduced. Therefore, the absolute value of the response near the higher harmonic component (N/rev) of high frequency caused by the rotation of the rotor blade is increased, so that the effect of reducing the high frequency vibration is offset to some extent. Therefore, when the resonance frequency fn of the spring is not close to the frequency (1/rev) of the main rotor, the damping factor of the damper should preferably be decreased to some extent to reduce the high frequency vibration. Since the cabin weight m of the helicopter changes depending on the number of passengers and the cargo weight, the cabin weight should be measured at least before flight, and the resonance frequency fn of the spring obtained from the measured cabin weight is compared with the vibration frequency (1/rev) of the main rotor. The voltage should be adjusted so that the damping force of the variable damper is increased when these frequencies are close to each other, and the damping force of the variable damper is decreased when these frequencies are apart from each other. Thereupon, both of the low and high frequency vibrations can be reduced in a well-balanced manner.

To automatically adjust the above-described variable damper, the cabin weight detector is provided on the helicopter itself, the output of the cabin weight detector is inputted to the controller, the comparison of the resonance frequency fn of the spring and the vibration frequency (1/rev) of the main rotor and the judgment are performed in a similar manner as described above, and the result is inputted as the voltage of the variable damper. This automatic adjustment of the variable damper can reduce both of the low and high frequency vibrations automatically in a well-balanced manner.

The number of revolutions of the main rotor of the helicopter is normally constant, and it can be stored in a memory as a constant value. However, in some helicopters, the number of revolutions of the main rotor is made variable by using a digital electronic engine controller called FADEC (Full Authority Digital Electronic Control), so that when takeoff and landing are performed in a densely populated area, the number of revolutions is decreased to reduce the vibration and noise propagated to the surroundings, and inversely when the helicopter is flied in a sparsely populated area, the number of revolutions is increased for high-speed flight. In such helicopters, the detector for the number of revolutions of the main rotor is provided, the resultant vibration frequency (1/rev) of the main rotor is compared with the resonance frequency fn of the spring, which is obtained by the above-described method, and the damping force of the variable damper can be changed in the same way as described above. Thus, both of the low and high frequency vibrations can be reduced automatically in a well-balanced manner.

A stopper is provided between the cabin support portion or the airframe and the cabin to prevent the gap between them from increasing beyond a certain limit. Therefore, no excessive load is applied to the actuators and springs even if a large displacement, excessive load, etc. other than vibration are applied.

For the vibration of a helicopter, the largest is the vibration in the vertical direction, followed by one in the lateral direction. The vibration in the longitudinal direction, i.e., that in the aircraft axis direction scarcely occurs. Therefore, the actuators and springs should be arranged in such a manner that a largest number of them are arranged so that the axis of the actuator is in the vertical direction, and several of them are arranged in the lateral direction. The actuators and springs in the longitudinal direction are often unnecessary. For this reason, gap maintaining means is provided to keep the gap in the aircraft axis direction between the airframe and the cabin substantially constant, so that the cabin is prevented from falling forward while the transfer of vibration to the cabin is inhibited, thereby enhancing the safety.

BRIEF DESCRIPTION OF THE DRAWINGS

FIG. 1a is a perspective view of a helicopter in accordance with a first embodiment of the present invention; FIG. 1b is a block diagram for a control system including a computer in accordance with the present invention;

FIG. 2a is a front view of a rod which can be used in the first embodiment of the present invention; FIG. 2b is a side view of a hybrid actuator; and FIG. 2c is a schematic view showing a stopper for inhibiting the longitudinal movement of a cabin;

FIG. 3 is a flow chart for controlling the hybrid actuators in accordance with the first embodiment of the present invention;

FIG. 4 is a frequency-response characteristic diagram for illustrating the effect of the present invention;

FIG. 5 is a side arrangement view of an actuator and a spring of a helicopter in accordance with a second embodiment of the present invention;

FIG. 6 is a schematic side view of a helicopter in accordance with a third embodiment of the present invention;

FIG. 7 is a frequency-response characteristic diagram for illustrating the effect of helicopter shown in FIG. 1;

FIG. 8 is a schematic side view of a helicopter in accordance with a fourth embodiment of the present invention;

FIG. 9 is a schematic sectional view of a variable damper used in the helicopter shown in FIG. 8;

FIG. 10 is a frequency-response characteristic diagram for illustrating the effect of the fourth embodiment;

FIG. 11 is a block diagram for illustrating damper control of a helicopter in accordance with a fifth embodiment of the present invention;

FIG. 12 is a block diagram for illustrating damper control of a helicopter in accordance with a sixth embodiment of the present invention;

FIG. 13 is a schematic perspective view of a helicopter in accordance with a seventh embodiment of the present invention;

FIGS. 14a and 14b are side and front views, respectively, of the portion near a joint of the seventh embodiment;

FIG. 15 is a view for illustrating the change of cabin in accordance with the seventh embodiment;

FIG. 16 is a schematic side view of a cabin joint portion in accordance with the seventh embodiment;

FIG. 17 is a schematic perspective view of a helicopter in accordance with an eighth embodiment of the present invention;

FIGS. 18a, 18b, and 18c are schematic side views of a suspending type, leg supporting type, and including type helicopters, respectively, in accordance with another embodiment of the present invention; and

FIGS. 19a and 19b are views showing vibration reducing apparatuses of the conventional helicopters.

## BEST MODE FOR CARRYING OUT THE INVENTION

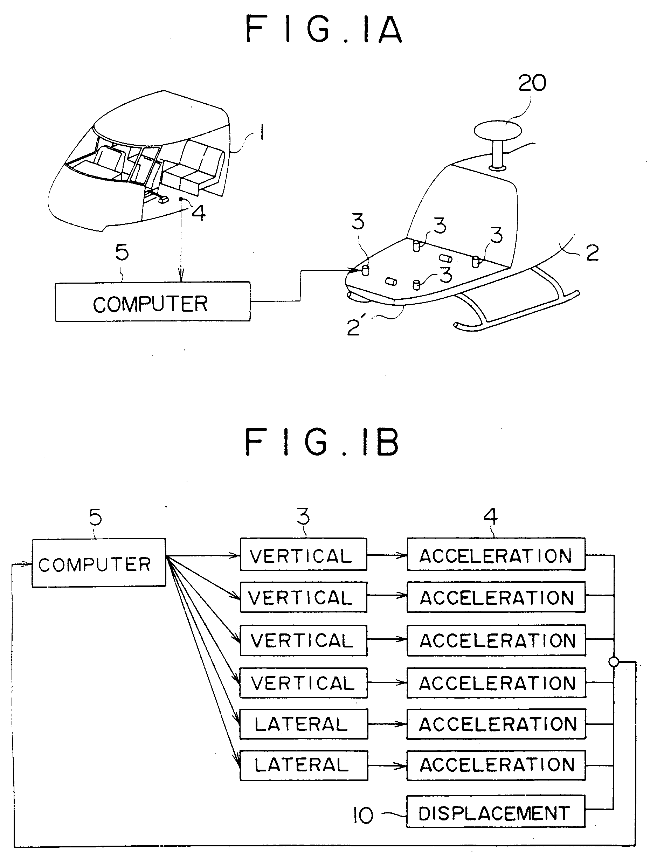

FIGS. 1 to 4 are views for illustrating a helicopter in accordance with a first embodiment of the present invention.

Referring to FIG. 1, the helicopter is structurally divided into a cabin 1 and an airframe 2. The airframe 2 is provided with a main rotor 20 rotated by an engine (not shown). The main rotor 20 has four rotor blades (not shown), whose rotation provides a lift for floating the helicopter. A tail rotor (not shown) is provided at the tail portion of the airframe 2. The tail rotor is also driven by the aforementioned engine. A cabin support portion 2' for mounting the cabin 1 is provided at the front portion of the airframe 2. The cabin support portion 2' has a structure such that two unillustrated beams protrude in parallel from the central portion of the airframe 2, two girders are installed to the beams perpendicularly to form a frame, and a thin plate is fixedly placed on the surface.

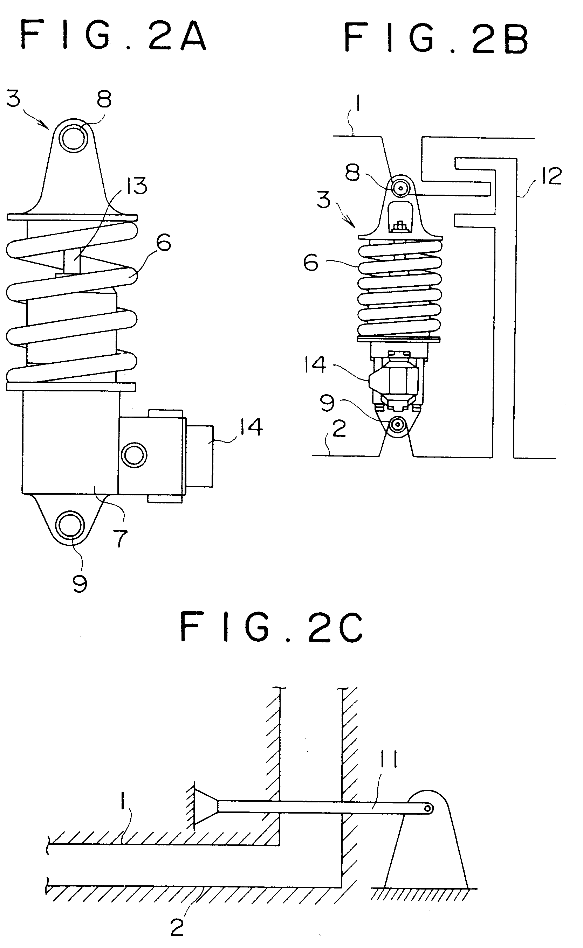

On this frame of the cabin support portion 2', hybrid actuators 3 in which a coil spring 6 and a hydraulic actuator 7 are combined in series as shown in FIG. 2b are mounted via the thin plate. The hybrid actuator 3 has attaching portions 8 and 9 at its each end. The attaching portion 8 on the coil spring side, together with the coil spring, is supported by a cylinder shaft 13 of the hydraulic actuator 8. The attaching portion 8 is screwed to the cabin 1, while the attaching portion 9 is screwed to the airframe 2, by which the cabin 1 is supported on the airframe 2. The hydraulic actuator 7, being compact but powerful, can withstand the whole load of the cabin 1. The drive of the hydraulic actuator 7 is controlled by a servo valve 14.

Since the cabin 1 is structurally separated from the airframe 2, vibration and noise can be isolated. The high frequency vibration (frequency = N/rev) is passively absorbed by the coil spring 6. The low frequency resonance, which may be produced on the aforementioned coil spring by the vibration exciting force caused by the rotation of the main rotor, is actively decreased by the hydraulic actuator 7.

As shown in FIG. 2b, a large displacement other than the normal vibration or an excessive load is received by a stopper 12 installed between the cabin 1 and the airframe 2, so that it is not applied to the hybrid actuator 3.

In this embodiment, the cabin 1 is supported by four hybrid actuators 3 installed vertically to reduce vertical vibration and two hybrid actuators 3 transversely to reduce lateral vibration. Thereupon, the vertical and lateral vibrations of the cabin are controlled. The longitudinal vibration, which naturally has a low vibration level, is not controlled in a special manner; the longitudinal distance between the cabin 1 and the airframe 2 is kept substantially constant by means of a rod 11 as shown in FIG. 2c. This rod 11 is of a universal joint type which does not restrict any movement other than that in the longitudinal direction.

The sinal transmitting system such as electric wiring for the flight control (not shown) in the cabin 1 is put along the rod 11 or supported by the same mechanism as that for the rod 11. Therefore, the electrical wiring and the like are not affected by the relative vibration between the cabin 1 and the airframe 2.

In the cabin 1, an acceleration sensor 4 is provided as a sensor for vibrational conditions in addition to the flight control system and rider's seats. The hydraulic actuator 7 is controlled by a control computer 5 for digital optimum control.

The optimum control will be described in detail.

The spring constant k of the coil spring 6 is set at a small value so as to absorb the vibration of frequency N/rev of helicopter's high frequency vibration. If the spring constant k is set at a small value in such a manner, the resonance vibration [ $(1/2\pi)(k/m)^{1/2}$ ], which is determined from the relation with the weight m of the cabin 1, closely approaches the frequency 1/rev of helicopter's low frequency vibration. If the high frequency vibration is decreased in the conventional helicopter, the remaining low frequency vibration causes uncomfortableness. Still more, if the cabin 1 resonates with the coil spring 6, the vibration of the cabin 1 becomes considerably great, producing more uncomfortable vibration than the natural high frequency vibration.

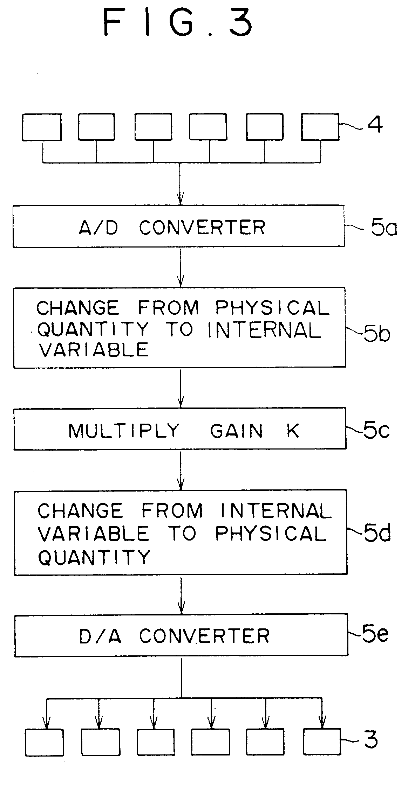

Thereupon, the hydraulic actuator is actively driven to reduce the low frequency vibration (1/rev). The control for this operation will be described with reference to FIGS. 1b and 3. The vibration acceleration in the cabin 1 is detected by the acceleration sensor 4. The resultant acceleration is converted into a digital quantity by an A/D converter 5a in the control computer 5, and further into a state variable in accordance with the computation in the computer (5b). This state variable is multiplied by a gain K, which has been determined in advance (5c), to obtain an internal variable. Again, the conversion is performed from the internal variable to a physical quantity (5d) and to an analog quantity (5e). Finally, the converted quantity is inputted as a command signal to the hydraulic actuator portion of the hybrid actuator 3 for controlling the vibration.

Here, the gain K is determined from, for example, the well-known optimum control theory LQG (Linear Quadratic Method). For example, from two equations:

$$\text{equation of state: } X = A\dot{X} + BU$$

$$\text{performance function: } J = E\{ \int_0^\infty (XQX + URU)dt\},$$

the gain K is determined in advance by solving the Hamilton's equation or sometimes Riccati's equation, so as to minimize the performance function J.

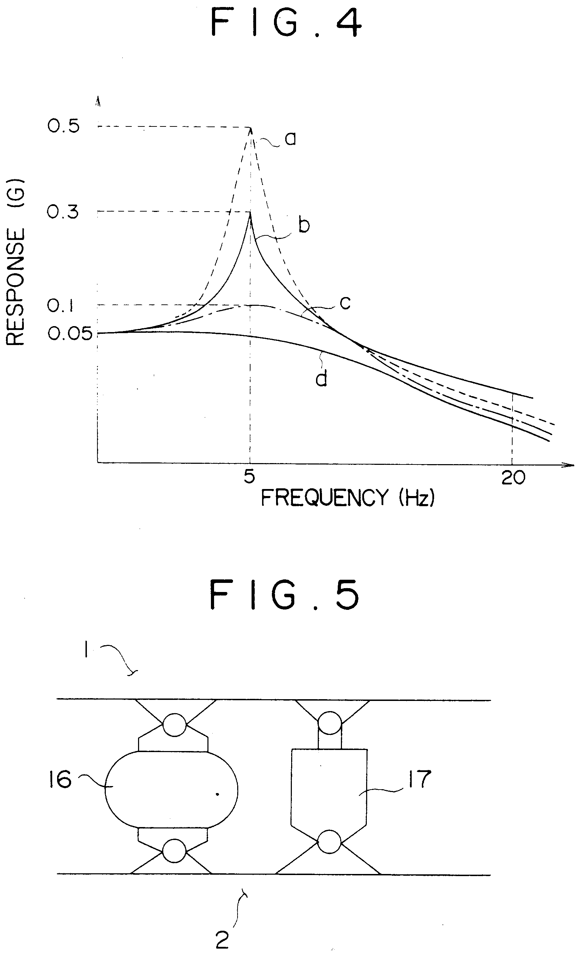

FIG. 4 shows an example of the qualitative effect obtained after such control has been carried out. The high frequency vibration of about 20 Hz has already been absorbed by the coil spring 6. However, the number of revolutions of helicopter blade was 5/sec, and the resonance peak of the coil spring 6 caused by this low frequency vibration was a vibration acceleration of about 0.5 G as indicated by the broken line in FIG. 4 when the hydraulic actuator 3 was not used. Contrarily, in this embodiment using the controlled hydraulic actuator 3, the resonance peak decreased to the vibration acceleration of about 0.1 G as indicated by the alternate long and short dash line c in FIG. 4. In FIG. 4, the solid line b indicates the case where the hydraulic actuator 3 is not used, but a damper is used, and the solid line d indicates the case where both the hydraulic actuator and the damper are used.

When a helicopter equipped with such a vibration control apparatus flies, the weight of the cabin 1 is detected before flight on the basis of how much the cabin 1 has sunk by means of a displacement sensor 10 used as a cabin weight detector. The hydraulic actuators 7 are adjusted in advance so that the height of the cabin 1 coincides with the position of the stopper 12. Since both the helicopter's high frequency vibration (its frequency = N/rev ) and the movement due to the hydraulic actuator 7 at a low frequency have a small amplitude, the space of the stopper 12 of about several millimeters is sufficient. Thus, even if a large displacement occurs or if a static load is applied, a load falling outside a certain range is carried by the stopper 12, so that there is no structural problem with the airframe, and the safety of flight is not impaired. Further, since the coil spring 6 checks the high frequency vibration and the hydraulic actuator 7 controls the low frequency vibration only, a low power for carrying out active control is needed, so that the control system is made simple and effective. Still further, the problem of vibration isolation of the conventional main gear box is solved.

Thus, the vibrations from low frequency to high frequency are reduced, so that safe controllability can be maintained by the flight control system which is not affected by the relative vibration between the cabin 1 and the airframe 2.

Next, a second embodiment of the present invention will be described with reference to FIG. 5. In this embodiment, in place of the hybrid actuator in which a coil spring and a hydraulic actuator are arranged in series, an air spring 16 and an electromagnetic actuator 17 are arranged in parallel to support the cabin 1 on the airframe 2.

In this case, the air spring 16 supports the total weight of the cabin 1, and absorbs the high frequency vibration. Meanwhile, the electromagnetic actuator 17 is made to operate actively so as to decrease the low frequency resonance peak. Since the cabin weight can be carried by the air spring 16, the electromagnetic actuator 17 may have a relatively low capacity. It is therefore possible to use a sufficiently small and lightweight electromagnetic actuator 17 as a part of the helicopter. Further, the vibration of the cabin 1 can be reduced more effectively by using the quick response of the electromagnetic actuator 17. Also, because it is of parallel type, not only the air spring 16 but also the electromagnetic actuator 17 must have a function of not transmitting the high frequency vibration. The electromagnetic actuator 17 with a quick response can be driven only at the time of low frequency vibration peak, and turned off at the time of high frequency vibration, so that an inoperative state in which the actuator 17 has no actuator function and does not transmit the vibration can be created. By using the electromagnetic actuator with a quick response, the high frequency vibration can be absorbed by the air spring 16 only, while the resonance peak of low frequency vibration being checked by the electromagnetic actuator 17.

Since the control becomes somewhat complicated in the above example, it is preferable that the electromagnetic actuator 17 be also provided, in series, with a spring for absorbing the high frequency vibration so as to serve as a hybrid actuator, and the air spring 16 for carrying the load of cabin 1 be provided in parallel to the electromagnetic actuator 17. In the above example, only the spring and the actuator have been described, but needless to say, the construction and function of other elements are the same as those in the first embodiment.

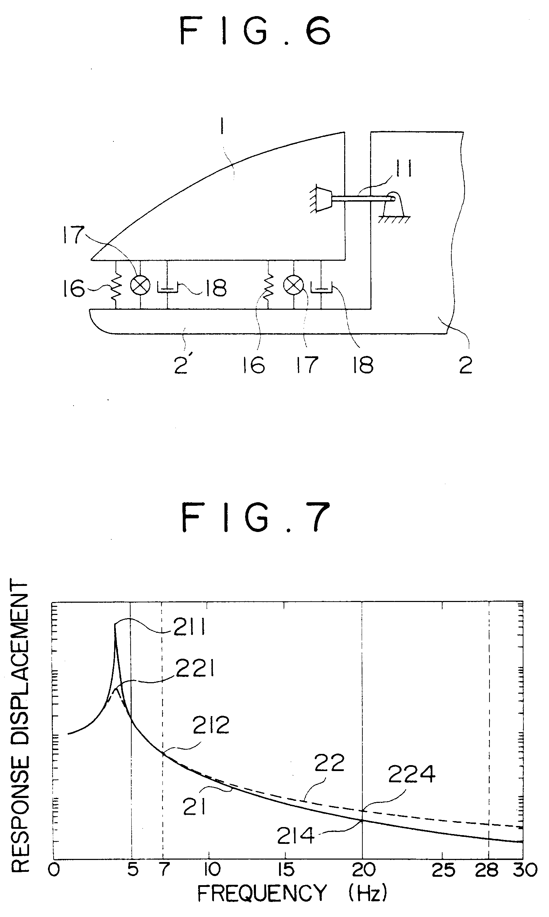

Next, a third embodiment in which a damper is used in addition to the above-described spring and actuator to support the cabin 1 will be described with reference to FIG. 6.

In FIG. 6, dampers 18 are installed in parallel in addition to the springs 16 and actuators 17 of the second embodiment shown in FIG. 5. This arrangement decreases the low frequency resonance peak caused by the spring 16 to be controlled by the actuator 17, so that the vibration of the cabin 1 can be reduced more effectively. Even if the low frequency resonance peak is not checked by a failure of the actuator 17, an excessive response can be prevented by the damper 18, leading to a helicopter which is comfortable to ride in.

In the third embodiment shown in FIG. 6, an example in which the damper 18 is used in the parallel arrangement with the spring 16 and the actuator 17 has been described. However, the damper 18 can be installed in parallel to the series arrangement of the spring and the actuator 7 as shown in FIGS. 1 and 2 with the same effect. The damping effect on the motion of the entire cabin 1 is larger when the damper 18 and the actuator 17 are arranged in parallel as in the above example than when they are in series. Therefore, the damper 18 need not be located at a specific position, provided that it is physically in parallel to the actuator 17. However, it is desirable that the damper 18 be installed adjacently to a position where the actuator 17 is installed because the airframe maintenance becomes easy and it is better if all related equipment is arranged within close proximity.

FIG. 6 is a schematic view for showing the positional relation of the damper 18 with respect to the actuator 17 and the spring 16, and other elements are not shown. However, needless to say, this embodiment has the same equipment and same functions as those of the first and second embodiments as a helicopter.

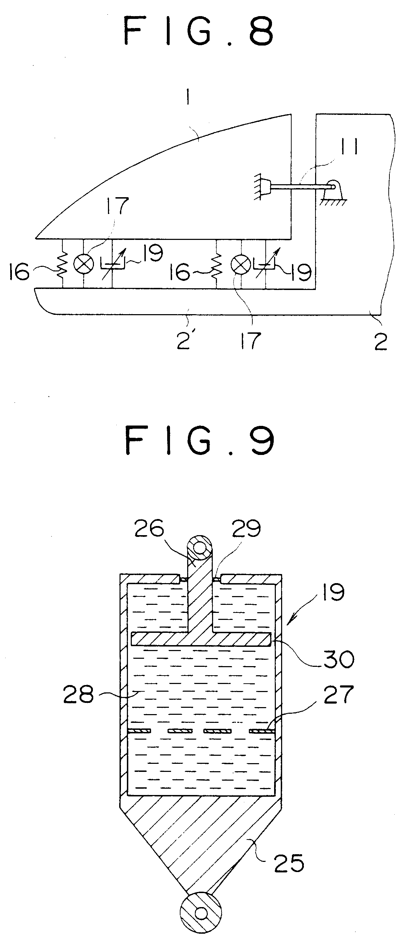

Next, a helicopter in accordance with a fourth embodiment of the present invention in which the damping capacity of the damper 18 in the third embodiment is variable will be described with reference to FIGS. 7 to 10, laying stress on the difference from the above embodiments.

FIG. 7 is a frequency-response characteristic diagram. The ordinates represent the response to vibration in a logarithmic scale and the abscissae the frequency of vibration. The solid line 21 in the figure indicates the characteristic in the case where the dampers are not used, while the broken line 22 indicates the characteristic in the case where the dampers are used. As seen from this figure, the use of the dampers lowers the peak from point 211 to point 221 in the low frequency vibration range near the resonance peak of the spring, but provides a gentle slope of the whole response curve, so that in the high frequency vibration range (about 20 Hz in this figure), the absolute value of response becomes inversely larger from point 214 to point 224 when the dampers are used. This means that although considerable part of vibration is absorbed by the springs 6 or 16, the use of the dampers 16 increases the response to high frequency vibration (N/rev) caused by the rotation of the rotor blades. In other words, this means that an improvement is needed to ensure increased comfort in the cabin 1.

As described in the third embodiment, the main object of the damper 18 is to lower the resonance peak when the resonance of the spring 6 or 16 is produced by the low frequency vibration (1/rev) caused by the rotation of the rotor. Therefore, the damping capacity of the damper 18 may be low if the resonance peak is relatively low. This offers an advantage of changing the damper 18 of the third embodiment to a variable damper 19 as shown in FIG. 8.

Specifically, as shown in FIG. 9, the variable damper is configured so that electrodes 27 are disposed in a cylinder 25 of the damper and the cylinder 25 is filled with an electroviscous gas 28. Referring to FIG. 9, a variable damper 19 having a piston 26 is used by fixing the holes of the cylinder 25 and the piston 26 to the airframe 2 and the cabin 1, respectively. At the portion where the piston 26 engages with the cylinder 25, a seal 29 and an orifice 30 are provided. Incidentally, the electroviscous fluid which is still making marked technical advances is generally manufactured by dispersing particles serving their purpose, such as starch, cellulose, or silica gel, into oil, and exhibits a property that flow resistance (damping) increases with the increase in applied voltage.

Next, how to use this variable damper 19 will be described.

As described above, the object of the damper is to inhibit a remarked increase of vibration of the spring 16 caused by the approach of the number of revolutions (1/rev) of the helicopter rotor to the resonance frequency [ $fn = (1/2\pi)(k/m)^{1/2}$ ] of the spring 16, thereby the vibration is kept to a degree such as to be controlled by the actuator 17. When the resonance frequency fn of the spring 16 is changed by the change of the weight (m) of the cabin 1 due to the change of the riders and loads, or when the number of revolutions (1/rev) of the rotor is changed, there is a large difference between the number of revolutions (1/rev) of the rotor and the resonance frequency (fn) of the spring. In this case, damping is not needed. Therefore, the response at high frequency can be reduced by decreasing the voltage of the aforementioned variable damper 19 and decreasing the damping factor. As a result, a quiet cabin 1 with low vibration can be realized at both high and low frequencies.

Specifically, after loads and passengers are put on board, the weight of the cabin 1 is detected by the displacement sensor 10 in FIGS. 1 and 2, and the position of the actuator 7 is adjusted so as to coincide with the position of the stopper 12. At this time, the resonance frequency $[ fn = (1/2\pi)(k/m)^{1/2} ]$ of the spring 6 is also calculated, and the calculated value is compared with the number of revolutions (1/rev) of the helicopter blade which is known in advance. If these values are close to each other, the voltage of the variable damper 19 is turned on, while if they are not, the voltage is turned off, or the voltage is lowered.

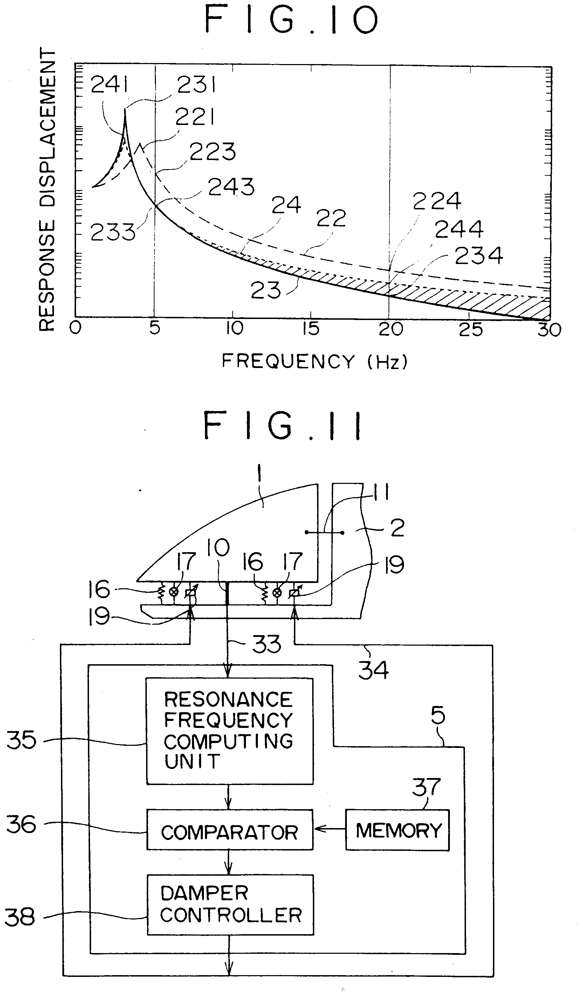

The response in the case where the cabin weight is changed will be described with reference to the frequency response diagram of FIG. 10.

In the helicopter of the third embodiment, which uses the damper 18 having a constant damping factor, if the response is represented by line 22 in the case where the cabin 1 is relatively light in weight, the increase in weight of the cabin 1 only shifts the response curve to the left in the figure as indicated by line 24. That is to say, in the helicopter of the third embodiment, at a low frequency (about 5 Hz) corresponding to the vibration exciting force of rotor blade, responses indicated by points 223 and 463 are exhibited; while, at a high frequency vibration (N/rev) of about 20 Hz, high responses indicated by points 224 and 244 are exhibited.

Contrarily, in the helicopter of the fourth embodiment, which uses the variable damper 19, when the cabin 1 is relatively light in weight and the resonance frequency (fn) of the spring (point 221) is close to a low frequency of about 5 Hz corresponding to the vibration exciting force of rotor blade, the damper 19 provides the response indicated by line 22. However, when the weight of the cabin 1 increases and the resonance frequency (fn) parts from the low frequency to point 231, the response corresponding to the low frequency (about 5 Hz) of the rotor blade decreases to point 233, so that particularly strong damping is not needed. Therefore, the response is such as indicated by line 23 by weakening the variable damper 19. As a result, the response at the high frequency 24 due to the rotor blade decreases from point 244 to point 234 as compared with the case where damping is performed.

Likewise, the response in the case where the number of revolutions of the rotor blade can be changed will be described with reference to the frequency-response characteristic diagram of FIG. 7. When the number of revolutions of the rotor blade is small, for example, being 5 Hz, the high frequency vibration due to four blades is 20 Hz. Since the number of revolutions of the rotor blade is close to the resonance frequency of the spring (frequency at point 221), damping is needed to prevent resonance. As a results the response curve is as indicated by reference numeral 22.

If the number of revolutions of the helicopter rotor blade is increased to 7 Hz, the number of revolutions parts considerably from the resonance frequency of the spring (frequency at point 221), so that the effect of resonance is lessened. As a result, the need for damping is decreased. Therefore, the applied voltage of the variable damper 19 is lowered, or made zero; as a result, the response curve is as indicated by line 21. As seen from FIG. 7, the peak at the resonance frequency is high as indicated by reference numeral 211, but the response decreases as indicated by point 212 at the point near the number of revolutions (7 Hz) of the rotor blade. The high frequency vibration, which is a harmonic, increases up to about 28 Hz, and the response of the spring decreases at this frequency.

The use of the variable damper 19 can decrease vibration of the cabin 1 in both the low and high frequency vibration modes even if the operating conditions change, for example, if the weight of the cabin or the number of revolutions of the rotor blade change.

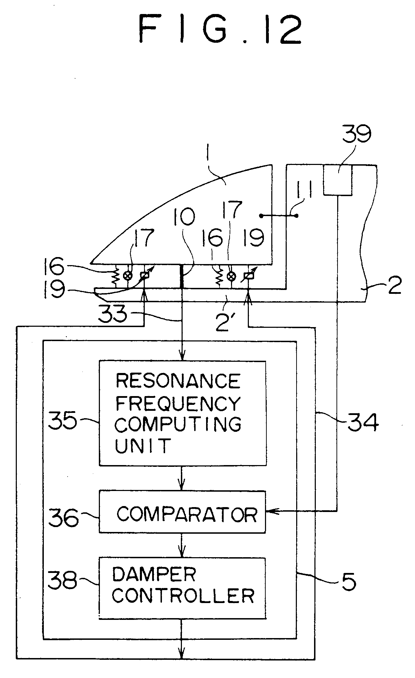

Next, a helicopter in which the control of the aforementioned variable damper 19 is automatically carried out will be described with reference to FIGS. 11 and 12.

FIG. 11 shows a fifth embodiment, in which the number of revolutions of rotor blade is constant. The number of revolutions is stored in a memory 37 of a control computer 5. FIG. 12 shows a sixth embodiment applied to a helicopter in which the number of revolutions of the rotor blade can arbitrarily be changed by means of FADEC, etc. The apparatus of this embodiment is equipped with a detector 39 for the number of revolutions in place of the memory 37 in FIG. 11 to take changes in the number of revolutions into account. In either case, the same processing is performed after the number of revolutions of the rotor blade is outputted to a comparator 36.

The cabin 1 is supported on the airframe 2 via the springs 16, actuators 17, and variable dampers 19, and the rear portion of the cabin 1 is supported by the rod 11. Under the cabin 1 is disposed a displacement sensor 10, which detects the weight m of the cabin with loads and passengers. A cabin weight detection signal 33 is inputted to a resonance frequency computing unit 35, where the resonance frequency fn of the spring 16 is computed by the above-described equation. The determined resonance frequency fn is inputted to the comparator 36, where it is compared with the number of rotations (1/rev) of the rotor blade inputted from the memory 37 or the detector 39 for the number of revolutions. The result of the comparison is inputted to a damper controller 38, which outputs a variable damping adjusting signal 34 to the variable dampers 19 so as to enhance the damping capacity of the damper 19 when the two values are close to each other, and to lower the damping capacity of the damper 19 when the two values differ greatly.

Since the weight of the cabin 1 is usually unchanged after the flight of helicopter is started, the setting of the damping factor is completed before the start of flight in the fifth embodiment of FIG. 11. Contrarily, in the sixth embodiment of FIG. 12, the number of revolutions of the rotor blade sometimes need be changed during flight in accordance with the flight conditions, so that the damping factor is changed in real time even during flight.

If the number of revolutions of the rotor blade can be changed during flight as in the sixth embodiment, the helicopter flies relatively quietly by decreasing the number of revolutions when it flies in a thickly inhabited area, while it can fly at a high speed by increasing the number of revolutions when it flies in a sparsely populated area. This realizes a helicopter which provides an environment involving relatively less vibration and noise to persons outside the helicopter as well as the riders in the cabin 1.

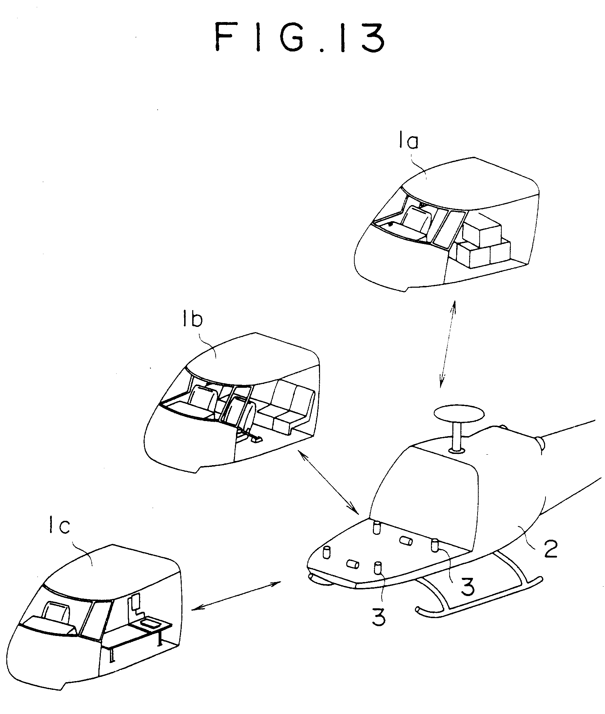

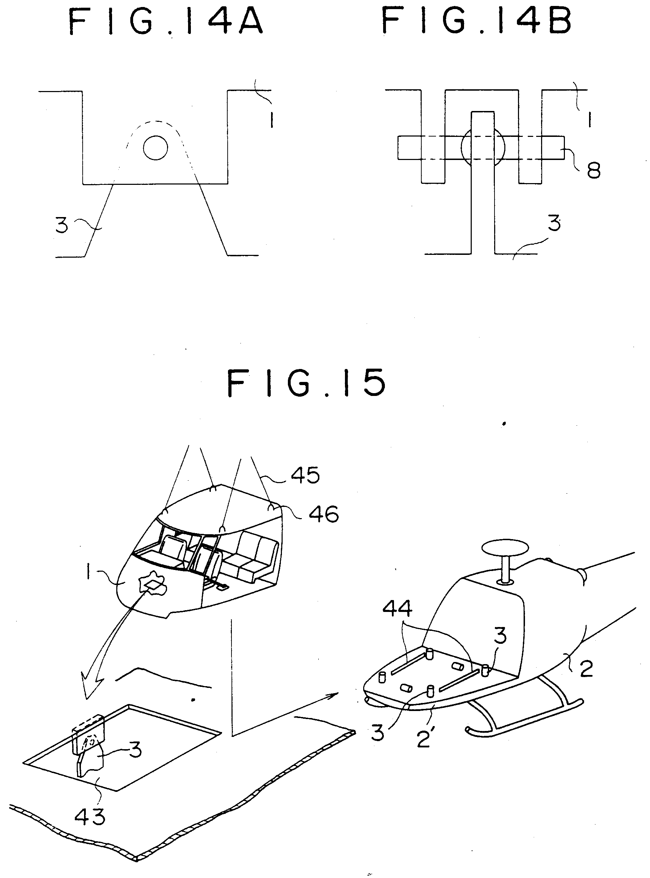

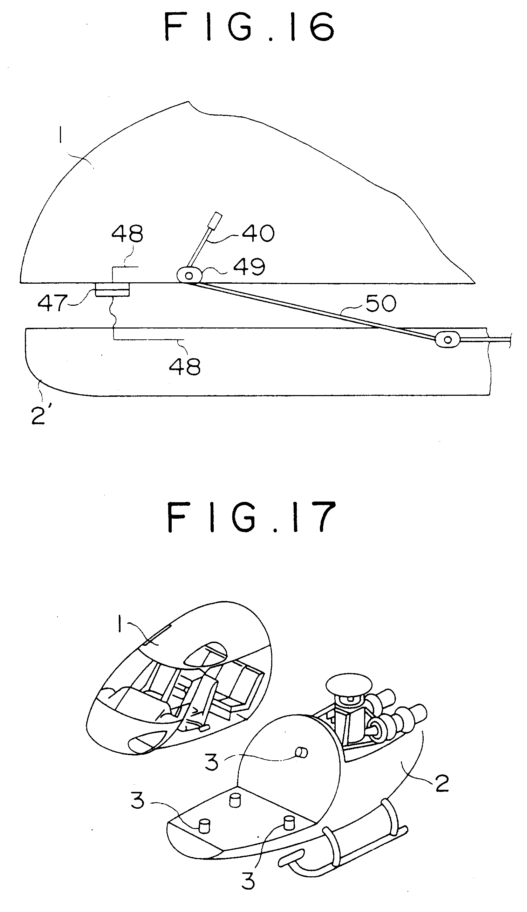

In the present invention, the cabin 1 is separated structurally from the airframe 2. Therefore, as shown in a seventh embodiment of FIG. 13, the cabin 1 of the same outer shape and with different applications, such as a passenger cabin 1a, a cargo cabin 1b, or an emergency medical activity cabin 1c, can be used as a module in which cabin interior has been set in advance for each application. In this case, the floor of the cabin 1 is provided with a small opening 43 for convenient work for connection to the actuator 3 as shown in FIGS. 14 and 15 (FIG. 15 shows the state in which a small door installed to the opening 43 is opened). The attaching portion 8 is of a simple construction which can be replaced easily, such as a pin or a bolt.

The flight control is connected to the airframe 2 with a bolt or pin connection at a specific place if possible. Specifically, as shown in the partially enlarged view of FIG. 16, a control linkage 50 is basically installed on the airframe side, and is connected to the portion of a control stick 40, which is installed near the pilot, by installing a hinge point 49 on the cabin side. Therefore, when the cabin 1 is separated, the control linkage 50 is disconnected at the hinge point 49 on the cabin side. An electric cable 48 is connected by installing a connector 47 between the cabin 1 and the airframe 2. The hydraulic system is basically installed in the airframe 2 only.

This modular cabin 1 is changed by lifting hooks 46 with a crane 45. If rail-shaped stoppers 44 are installed on the cabin support portion 2' of the airframe 2 as shown in FIG. 15, the cabin 1 can easily be changed from the front by means of sliding movement. Although the cabin 1 has the same shape in the above example, there is no special trouble if the cabin 1 does not have the same shape, provided that the weight and the center of gravity of the cabin 1 and the position and size of the attaching portion 8 are substantially the same.

As described above, making the cabin 1 a modular unit provides an efficient and easy-to-use helicopter, because a special-purpose cabin is used, in addition to the vibration reducing effect described above. Further, the work for changing the cabin interior for each application can be performed very simply and rapidly, and the helicopter can be used for a wider variety of applications, thereby offering an advantage of increased utilization of one helicopter.

In the above embodiments, description has been made focusing on the respective intended configuration. Therefore, some illustrations and descriptions of configuration, operation, and effect of the elements which are not related to the intended configuration have been omitted. However, needless to say, each of the above embodiments has the same configuration as that of the first and second embodiments as a helicopter, and performs the same operation and achieves the same effect.

In some of the above embodiments, an example of either one arrangement of springs and actuators, series or parallel, has been described on account of space consideration. However, series or parallel arrangement can be used in any embodiment.

Various arrangements of hybrid actuators 3 in FIG. 1 can be considered depending on the scale of the airframe 2, the weight of the cabin 1, the type of the airframe 2, etc. When the helicopter is small and the cabin 1 is light in weight, small number of hybrid actuators 3 as shown in FIG. 17 can achieve a satisfactory vibration reducing effect. For the helicopter shown in FIG. 17, since the cabin 1 is lightweight and small, a hybrid actuator 3 can be used in place of the rod 11.

Further, various floating types, in which the cabin 1 is separated from the airframe 2 depending on the type of the airframe, can be considered. As shown in FIG. 18, a type which is more suitable for the scale of the airframe, engine and gearbox arrangement, etc. can be selected.

FIG. 18a shows a type in which the cabin 1 is suspended from the airframe 2 via the hybrid actuators 3. For this type, strong stoppers (not shown) (reference numeral 12 in FIG. 2b) are installed near the hybrid actuators 3, so that the cabin 1 can be suspended safely if the hybrid actuator 3 fails. The rod 11 is provided to prevent the longitudinal movement of the cabin 1.

FIG. 18b also shows a suspended type. For this type, the cabin 1 is not suspended directly from the airframe 2, but is suspended via the hybrid actuators 3 installed on legs 41. In this case, a L-shaped cabin support portion 42 is installed to the legs 41 at the position under the cabin 1 to prevent the cabin 1 from dropping if the hybrid actuator 3 fails.

FIG. 18c shows a type in which a cylindrical cavity is provided at the front portion of the airframe 2 and the cabin 1 is supported vertically and laterally in the cavity by means of the hybrid actuators (not shown). Together with the rod (not shown) installed at the deep portion of the cavity of the airframe 2, this configuration provides a helicopter with greater safety.

As described above, the embodiments of the present invention perform the following operation and achieve the following effect.

In the above helicopter of the present invention, since the cabin 1 is separated from the airframe 2, the vibration including the vibration of frequency N/rev of the helicopter in the cabin 1 is significantly decreased, and simultaneously the noise transmitting in the airframe is reduced, thereby achieving comfortableness to ride in. Specifically, the cabin 1 is supported by the hybrid actuators 3 in each of which the coil spring 6 and the hydraulic actuator 7 are combined or by the air springs 16 and the electromagnetic actuators 17, and the high frequency vibration is inhibited by the springs, while the low frequency vibration by the actuators. Thereupon, a vibration reducing effect larger than that produced by the springs only can easily be achieved without the use of a system as complex as that needed for the control carried out by the actuators only. The installation of stoppers 12 between the cabin 1 and the airframe 2 inhibits the static movement, so that the airframe can easily withstand an accidental large displacement or an excessive load. The effect on flight safety, which is caused by the separation of the cabin 1, is completely eliminated by the stoppers 12 and other safety devices. Since the springs inhibit the high frequency vibration and the actuators control the low frequency vibration only, the power for driving the actuators can be low, and the control system can be simple. By applying digital optimum control to the actuator control, a large vibration reduction can always be maintained even if the flight conditions, the weight of the cabin 1, etc. are changed. Thus, the helicopter in accordance with the present invention interrupts the vibration and noise which are felt by the riders to be uncomfortable, thereby achieving comfortableness to ride in the helicopter.

**Claims**

1. A helicopter comprising:

   a main rotor having a plurality of blades;
   an engine for driving said main rotor;
   an airframe having said engine therein and a cabin support portion;
   springs and actuators installed on said cabin support portion;
   a cabin supported on said cabin support portion via said springs and said actuators;
   stoppers installed between said airframe including said cabin support portion and said cabin in parallel to said actuators so as to limit a distance between said cabin support portion and said cabin which varies with vibration within a certain range;
   a vibration state sensor installed in said cabin; and
   a vibration damping controller for receiving an output of said sensor and inputting a vibration damping signal which is obtained by multiplying an output value by gain K to said actuators.

2. A helicopter according to claim 1, wherein distance maintaining means is provided to keep a distance in the aircraft axis direction between said airframe and said cabin substantially constant.

3. A helicopter according to claim 2, wherein said actuator consists of a hydraulic actuator, and said hydraulic actuator and said spring are arranged in series to support said cabin.

4. A helicopter according to claim 2, wherein said actuator consists of an electromagnetic actuator, and said electromagnetic actuator and said spring are arranged in parallel on said cabin support portion to support said cabin.

5. A helicopter according to claim 1, 2, 3, or 4, wherein dampers are installed in parallel to said actuators to support said cabin on said cabin support portion.

6. A helicopter according to claim 5, wherein said damper consists of a variable damper, in which electrodes are installed in a cylinder of said variable damper, and said cylinder is filled with an electroviscous fluid.

7. A helicopter according to claim 6, wherein said helicopter further comprises a cabin weight detector, a resonance frequency computing unit for obtaining a spring resonance frequency from the output from said detector, a comparator for comparing said spring resonance frequency with a number of revolutions of said main rotor, and a damper controller for outputting a variable damping adjusting signal obtained from a comparison result to said variable damper.

8. A helicopter according to claim 7, wherein a detector for a number of revolutions of said main rotor is provided, and the number of revolutions obtained from said detector is outputted to said comparator.

9. A helicopter according to claim 5, wherein said cabin is modularized, and a different modular cabin can be mounted in accordance with an object of flight.

**Patentansprüche**

1. Hubschrauber, umfassend:

   einen Hauptrotor mit einer Vielzahl von Blättern;

   ein Triebwerk zum Antrieb des Hauptrotors;

   ein Flugwerk mit dem darin befindlichen Triebwerk und einem Kabinenstützteil;

Federn und Stellglieder, die am Kabinenstützteil angebracht sind;

eine an dem Kabinenstützteil über die Federn und Stellglieder getragene Kabine;

Anschlägen, die zwischen dem, das Kabinenstützteil und die Kabine umfassenden Flugwerk parallel zu den Stützgliedern so angebracht sind, daß ein Abstand zwischen dem Kabinenstützteil und der Kabine, der mit der Vibration innerhalb eines bestimmten Bereichs schwankt, begrenzt wird;

einen Sensor für den Vibrationszustand, der in der Kabine angebracht ist; und

einen Vibrationsdämpfungsregler zur Aufnahme einer Abgabe dieses Sensors und zur Eingabe eines Vibrationsdämpfungsdämpfungssignals in die Stellglieder, das durch Verstärken eines Abgabewerts durch die Verstärkung K erhalten wird.

2. Hubschrauber gemäß Anspruch 1, bei dem eine den Abstand aufrechterhaltende Vorrichtung vorgesehen ist, um einen Abstand in Richtung der Luftfahrzeugachse zwischen dem Flugwerk und der Kabine im wesentlichen konstant zu halten.

3. Hubschrauber gemäß Anspruch 2, bei dem das Stellglied aus einem hydraulischen Stellglied besteht, und das hydraulische Stellglied und die Feder in Reihe angeordnet sind, um die Kabine zu tragen.

4. Hubschrauber gemäß Anspruch 2, bei dem das Stellglied aus einem elektromagnetischen Stellglied besteht, und das elektromagnetische Stellglied und die Feder parallel an dem Kabinenstützteil angeordnet sind, um die Kabine zu tragen.

5. Hubschrauber gemäß Anspruch 1, 2, 3 oder 4, bei dem parallel zu den Stellgliedern Dämpfungsvorrichtungen angebracht sind, um die Kabine an dem Kabinenstützteil zu tragen.

6. Hubschrauber gemäß Anspruch 5, bei dem die Dämpfungsvorrichtung aus einer variablen Dämpfungsvorrichtung besteht, in der Elektroden in einem Zylinder der variablen Dämpfungsvorrichtung angebracht sind, und der Zylinder mit einem elektroviskosen Fluid gefüllt ist.

7. Hubschrauber gemäß Anspruch 6, der ferner umfaßt:

einen Kabinengewichtsdetektor, ein Resonanzfrequenz-Rechengerät zwecks Erhalt einer Federresonanzfrequenz aus der Abgabe dieses Detektors, einen Komparator zum Vergleich der Federresonanzfrequenz mit einer Anzahl von Umdrehungen des Hauptrotors, und einen Dämpfungsregler zur Abgabe eines von einem Vergleichsergebnis erhaltenen variablen Dämpfungseinstellungssignals in die variable Dämpfungsvorrichtung.

8. Hubschrauber gemäß Anspruch 7, bei dem ein Detektor für die Anzahl der Umdrehungen des Hauptrotors vorgesehen ist, und die von dem Detektor erhaltene Anzahl der Umdrehungen zum Komparator abgegeben wird.

9. Hubschrauber gemäß Anspruch 5, bei dem die Kabine modularisiert ist, und eine unterschiedliche modulare Kabine in Übereinstimmung mit einem Flugobjekt montiert werden kann.

**Revendications**

1. Hélicoptère comprenant :

   - un rotor principal équipé d'un certain nombre de pales,
   - un moteur servant à entraîner ledit rotor principal,
   - une cellule d'hélicoptère contenant ledit moteur et une portion de support de la cabine,
   - des ressorts et des vérins installés sur ladite portion de support de la cabine,
   - une cabine soutenue par ladite portion de support de la cabine par l'entremise desdits ressorts et vérins,
   - des dispositifs d'arrêt installés entre ladite cellule d'hélicoptère comprenant ladite portion de support de la cabine et ladite cabine, parallèlement auxdits vérins, de façon à limiter la distance entre ladite portion de support de la cabine et ladite cabine, distance qui varie dans un certain domaine du fait des vibrations,
   - un appareil de mesure de l'état des vibrations installé dans ladite cabine, et
   - un contrôleur d'amortissement des vibrations servant à recevoir la valeur affichée par ledit appareil de mesure, et à envoyer auxdits vérins une valeur d'amortissement des vibrations qui est calculée en multipliant la valeur affichée par un gain K.

2. Hélicoptère selon la revendication 1, caractérisé en ce qu'il est équipé de moyens de maintien de distance servant à maintenir approximativement constante la distance entre ladite cellule et ladite cabine dans la direction de l'axe de l'hélicoptère.

3. Hélicoptère selon la revendication 1 ou la revendication 2, caractérisé en ce que ledit vérin est un vérin hydraulique, et en ce que ledit vérin hydraulique et ledit ressort sont agencés en série pour soutenir ladite cabine.

4. Hélicoptère selon la revendication 1 ou la revendication 2, caractérisé en ce que ledit vérin est un vérin électromagnétique, et en ce que ledit vérin électromagnétique et ledit ressort sont agencés en parallèle sur ladite portion de support de la cabine pour soutenir ladite cabine.

5. Hélicoptère selon la revendication 1, 2, 3 ou 4, caractérisé en ce que des amortisseurs sont installés en parallèle avec lesdits vérins pour soutenir ladite cabine sur ladite portion de support de la cabine.

6. Hélicoptère selon la revendication 5, caractérisé en ce que ledit amortisseur est un amortisseur variable, dans lequel on a placé des électrodes dans un cylindre dudit amortisseur variable, ledit cylindre étant rempli d'un fluide électro-visqueux.

7. Hélicoptère selon la revendication 6, caractérisé en ce que ledit hélicoptère comporte en outre un appareil de mesure du poids de la cabine, une unité de calcul de la fréquence de résonance servant à calculer la fréquence de résonance du ressort sur la base de la valeur affichée par ledit appareil de mesure, un comparateur servant à comparer la fréquence de résonance dudit ressort avec la fréquence de rotation dudit rotor principal, et un contrôleur d'amortisseur servant à envoyer audit amortisseur variable une valeur de réglage de l'amortissement variable calculée sur la base du résultat de la comparaison.

8. Hélicoptère selon la revendication 7, caractérisé en ce que l'on a prévu un appareil de mesure de la fréquence de rotation dudit rotor principal, et en ce que la fréquence de rotation affichée par ledit appareil de mesure est envoyée audit comparateur.

9. Hélicoptère selon la revendication 5, caractérisé en ce que ladite cabine est de construction modulaire, et que l'on peut monter une cabine modulaire différente selon le but du vol.

# FIG. IA

# FIG. IB

# FIG. 2A

# FIG. 2B

# FIG. 2C

# F I G . 3

```
┌──┐ ┌──┐ ┌──┐ ┌──┐ ┌──┐ ┌──┐
└──┘ └──┘ └──┘ └──┘ └──┘ └──┘ ── 4
```

| A/D  CONVERTER | ~ 5a |

| CHANGE  FROM  PHYSICAL<br>QUANTITY  TO  INTERNAL<br>VARIABLE | ~5b |

| MULTIPLY   GAIN   K | ~5c |

| CHANGE  FROM  INTERNAL<br>VARIABLE  TO  PHYSICAL<br>QUANTITY | ~5d |

| D/A  CONVERTER | ~5e |

```
┌──┐ ┌──┐ ┌──┐ ┌──┐ ┌──┐ ┌──┐
└──┘ └──┘ └──┘ └──┘ └──┘ └──┘ ── 3
```

# F I G . 4

# F I G . 5

# F I G . 6

# F I G . 7

# F I G . 8

# F I G . 9

# FIG. 10

# FIG. 11

# F I G . 12

# FIG.13

# FIG.14A

# FIG.14B

# FIG.15

# F I G . 16

# F I G . 17

# FIG.18A

# FIG.18B

# FIG.18C

# FIG.19A

# FIG.19B